Europäisches Patentamt

European Patent Office

Office européen des brevets

(19)

(11) **EP 0 471 207 B1**

(12) **EUROPÄISCHE PATENTSCHRIFT**

(45) Veröffentlichungstag und Bekanntmachung des Hinweises auf die Patenterteilung:
**05.02.1997 Patentblatt 1997/06**

(51) Int Cl.6: **H04L 7/033**, H04L 7/02

(21) Anmeldenummer: **91112168.9**

(22) Anmeldetag: **20.07.1991**

(54) **Schaltungsanordnung zum Regenerieren und Synchronisieren eines digitalen Signals**

Circuit for the regeneration and synchronisation of a digital signal

Dispositif pour la régénération et synchronisation d'un signal numérique

(84) Benannte Vertragsstaaten:
**AT BE CH DE ES FR GB IT LI NL SE**

(30) Priorität: **07.08.1990 DE 4025004**

(43) Veröffentlichungstag der Anmeldung:
**19.02.1992 Patentblatt 1992/08**

(73) Patentinhaber: **Alcatel SEL Aktiengesellschaft**
**D-70435 Stuttgart (DE)**

(72) Erfinder:
 • **Menk, Klaus-Dieter**
 **W-6239 Eppstein-Bremthal (DE)**
 • **Preisach, Helmut**
 **W-7141 Murr (DE)**

(74) Vertreter: **Pohl, Herbert, Dipl.-Ing et al**
**Alcatel Alsthom**
**Intellectual Property Department,**
**Postfach 30 09 29**
**70449 Stuttgart (DE)**

(56) Entgegenhaltungen:
 **EP-A- 0 383 557          US-A- 4 604 582**

 • **IEEE TRANSACTIONS ON CIRCUITS AND SYSTEMS Bd. 25, Nr. 4, April 1978, New York, US, SS 222-228; W.C. LEUNG: 'Optimum LSI Implementation for a Digital Phase-Locked Loop'**
 • **PATENT ABSTRACTS OF JAPAN vol. 9, no. 110 (E-314)(1833) 15. Mai 1985 & JP-A-60 135**

**Beschreibung**

Die Erfindung betrifft eine Schaltungsanordnung sowie ein Verfahren zum Regenerieren und Synchronisieren eines digitalen Signals hoher Bitfolgefrequenz, das eine beliebige Phasenlage, einen Jitter und einen Wander zum Systemtakt aufweisen kann.

Bei herkömmlichen Synchronisationsvorrichtungen und -verfahren werden Phase-Locked-Loops (PLL) eingesetzt, mit deren Hilfe die Ahtastung eines digitalen Signals durchgeführt wurde. PLL's enthalten jedoch relativ große Kapazitäten, die schlecht integrierbar sind. Zudem verursachen unerwünschte Kopplungen mehrerer PLL's häufig Störungen, wie z.B. Schwebungen und Pendelungen.

Eine Schaltungsanordnung zum Regenerieren und Synchronisieren eines digitalen Signals hoher Bitfolgefrequenz ist auch aus der DE-OS 35 43 392 bekannt, die eine Delay-Line, einen Multiplexer sowie eine Auswertungsschaltung aufweist. Die Auswertung erfolgt unter anderem durch die Verwendung von Flip-Flops und einer weiteren Delay-Line. Dabei wird das digitale Signal im Bereich seiner Flanke abgetastet, wobei eine Fensterfunktion vorgesehen ist. Es hat sich jedoch herausgestellt, daß bei einer derartigen Auswertung des Signals ein Jitter zu Fehlinformationen führen kann, überdies ist der Regelbereich der Schaltungsanordnung eingeschränkt.

Es ist demgegenüber Aufgabe der Erfindung, eine Schaltungsanordnung sowie ein Verfahren zum einfachen und in weiten Bereichen fehlerfreien Regenerieren und Synchronisieren eines digitalen Signals hoher Bitfolgefrequenz zu schaffen. Dabei soll das Signal eine beliebige Phasenlage, einen Jitter und einen Wander zum Systemtakt aufweisen können.

Diese Aufgabe wird bei einer Vorrichtung der eingangs genannten Art mit Hilfe der in Anspruch 1 wiedergegebenen Merkmale und bei einem Verfahren durch die in Anspruch 7 aufgeführten Merkmale gelöst.

Dadurch, daß eine Abtastschaltung vorgesehen ist, mit deren Hilfe das digitale Signal in seiner Augenmitte abgetastet wird, ergibt sich beim Regenerieren und Synchronisieren des digitalen Signals eine sehr hohe Unempfindlichkeit gegen ein Jitter des Signals.

Besonders bevorzugt wird eine Ausführungsform der Schaltungsanordnung, bei der die Abtastschaltung wenigstens eine Korrelationsschaltung und einen Multiplexer sowie zumindest eine Logik-Schaltung aufweist, die die Ausgangssignale der Korrelations-schaltung auswertet und den Multiplexer steuert. Durch den Einsatz einer im folgenden als Delay-Line bezeichneten Verzögerungsleitung kann der Abtastzeitpunkt mit Hilfe einer Korrelation optimal bestimmt werden. Dazu werden die einzelnen Abgriffe der Delay-Line miteinander korreliert. Das Maximum der Korrelation wird in einer Logik-Schaltung zur Ermittlung der Augenmitte und damit des optimalen Abtastzeitpunkts bestimmt. Schließlich wird ein Multiplexer auf diesen Abtastzeitpunkt eingestellt. Dadurch, daß die Abtastung des Signals in der Augenmitte erfolgt, führt ein hochfrequenter Jitter des Signals gegenüber dem Systemtakt nicht zu Störungen.

Besonders bevorzugt wird eine Ausführungsform des Verfahrens, bei der eine diskrete Korrelation der Abgriffe erfolgt. Dadurch läßt sich das Verfahren mit einer besonders einfachen digitalen Schaltung realisieren, die außer einer Delay-Line Multiplizierer und diskrete Integrierer aufweist.

Nach einer Weiterbildung der Schaltungsanordnung sowie des Verfahrens wird bei einer wertdiskreten Betrachtung der abgetasteten Signale diesen ein bestimmter Wert zugeordnet: beispielsweise "1" für HIGH-Pegel und "-1" für LOW-Pegel. Dadurch ist eine erhebliche Vereinfachung der Schaltungsglieder möglich: als Multiplizierer werden EX-OR-Gatter und als Integrator Zähler verwendet.

Ein Ausführungsbeispiel der Schaltungsanordnung wird aufgrund des reduzierten Schaltungsaufwandes bevorzugt. Dort sind zur seriellen Berechnung der Korrelation zwei Multiplexer vorgesehen, die über eine Verzögerungsschaltung mit einem weiteren Multiplexer zusammenwirken. In einem Zwischenspeicher werden die Ergebnisse der seriellen Korrelation abgespeichert. Die dort vorhandenen Werte werden in einer Logik-Schaltung zur Ermittlung des Maximums der Korrelation bzw. der Augenöffnung als optimalem Abtastzeitpunkt, berechnet. Mit dieser Schaltung kann auch bei einer Delay-Line mit unbekannter Verzögerungszeit mit relativ geringem Aufwand ein Multiplexer optimal eingestellt werden.

Bevorzugt wird weiterhin ein Ausführungsbeispiel der Schaltungsanordnung, bei dem zum Ausgleich eines auf einem Wander beruhenden Bit-Slips ein Speicher, vorzugsweise ein FIFO-Speicher, vorgesehen ist. Aufgrund dieser Schaltung kann mit relativ geringem Aufwand ein Bit-Slip ausgeglichen werden, der darauf beruht, daß die der momentanen Abtastung dienende Augenöffnung aus der Delay-Line herauswandert.

Überdies wird ein Ausführungsbeispiel der Schaltungsanordnung bevorzugt, bei dem ein Speicher mit variabler Länge verwendet wird. Die Daten werden in diesen von zwei Multiplexern eingelesen, wobei die Länge des Speichers über zwei weitere Multiplexer eingestellt wird. Mit dieser relativ einfachen Schaltung lassen sich Bitfehler, die auf einem Wander des Signals beruhen, vermeiden.

Bevorzugt wird überdies eine Ausführungsform des Verfahrens, bei dem zum Ausgleich eines Wanders des Datensignals zum Systemtakt eine neue Augenöffnung als neuer Abtastpunkt gewählt wird, wobei die neue Augenöffnung ebenfalls mittels einer Korrelation bestimmt wird. Dabei wird parallel zur Korrelation, mit der die Augenöffnung des momentanen Abtastzeitpunkts bestimmt wird, eine Korrelation durchgeführt, um Korrelationswerte mit dem Datum vor und/oder nach dem momentanen Korrelationszeitpunkt zu erhalten. Ein Vergleich der damit erhaltenen Korrelationsergebnisse zeigt, wann die momentane Abtastung aus der Augenöffnung herausgewandert ist. Durch dieses Verfahren ist es möglich, einen neuen Abtastzeitpunkt ohne Bitfehler einzustellen, falls der momentane aufgrund eines Wanders aus der Delay-Line herauswandert.

Besonders bevorzugt wird eine Ausführungsform des Verfahrens, bei der eine Delay-Line mit bekannter Verzögerungszeit verwendet wird. Als Multiplizierer werden wiederum EXOR-Gatter und als Integratoren jedoch 1-Bit-Counter verwendet. Das Verfahren ist daher sehr einfach und preiswert durchführbar.

Nach einer Weiterbildung des Verfahrens wird bei einer Delay-Line mit unbekannter Verzögerungszeit eine Vereinfachung des Verfahrens dadurch erreicht, daß die Korrelation seriell berechnet und die Korrelationsergebnisse zur Bestimmung der Augenöffnung in einem Zwischenspeicher abgelegt werden.

Zur Vermeidung eines Bit-Slips wird bei einer bevorzugten Ausführungsform des Verfahrens ein Speicher, vorzugsweise ein FIFO-Speicher verwendet, in den das neue und das alte Datum zum gleichen Taktzeitpunkt geschrieben werden, falls das Datensignal schneller als der Systemtakt ist. Falls allerdings das Datensignal langsamer als der Takt ist, werden die für die Korrelation verwendeten Datensignale um eine Taktperiode verzögert, ohne daß eine Eintragung in den Speicher erfolgt.

Bei einer besonders bevorzugten Form des Verfahrens wird zur Bit-Slip-Kompensation ein Speicher, vorzugsweise ein FIFO-Speicher verwendet, dessen Länge mit Hilfe eines Multiplexers verlängert wird, falls das Datensignal schneller als der Takt ist, beziehungsweise dessen Länge verkürzt wird, falls das Datensignal langsamer als der Takt ist.

Die Erfindung wird im folgenden anhand der Figuren näher erläutert. Es zeigen:

Figur 1    einen Korrelator zur Verarbeitung der abgetasteten Signale einer Delay-Line;

Figur 2    eine Synchronisationsschaltung mit einem Korrelator gemäß Figur 1;

Figur 3    eine Synchronisationsschaltung mit einem Korrelator sowie mit einer Bit-Slip-Kompensation;

Figur 4    ein Diagramm, das ein Datensignal, die abgetasteten Signale sowie das Korrelationsergebnis dieser Signale wiedergibt;

Figur 5    eine Synchronisationsschaltung mit einem Speicher variabler Länge und

Figur 6    eine Synchronisationsschaltung zur Verwirklichung einer seriellen Korrelation.

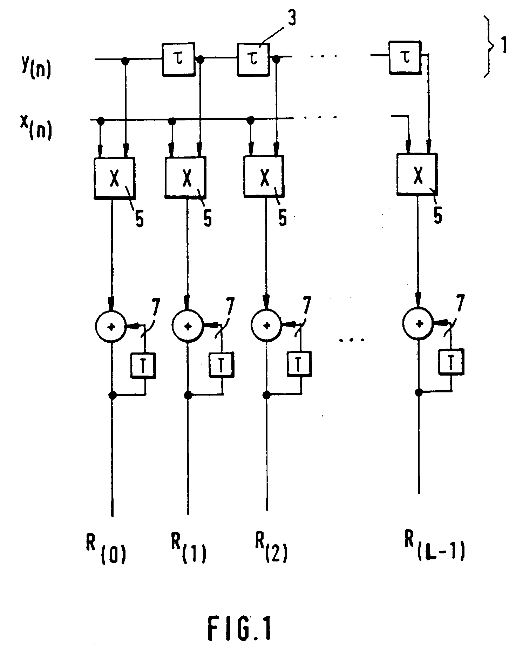

Zur Verdeutlichung der Funktion der Synchronisationsvorrichtung sowie des Verfahrens wird anhand von Figur 1 eine Korrelationsschaltung erläutert, mit der die diskrete Korrelation gemäß der folgenden Gleichung verwirklicht werden kann:

$$R_{(k)} = \sum_{n=0}^{N-1} x_{(n)} \cdot y_{(k+n)}$$

für k=0, ..., L-1, wobei mit N die Integrationskonstante und mit L die Anzahl der Abtastwerte bzw. Abgriffe bezeichnet werden.

Ganz oben in Figur 1 ist eine im folgenden als Delay-Line 1 bezeichnete Verzögerungs-Leitung angedeutet. Die verschiedenen Verzögerungsstufen 3 werden durch die Rechtecke mit dem eingezeichneten $\tau$ angedeutet.

Der Delay-Line wird das Signal $y_{(n)}$ zugeführt.

Unterhalb der Delay-Line sind mehrere Multiplizierer 5 eingezeichnet, denen einerseits von der Delay-Line 1 abgetastete Werte und andererseits getaktete Signale $x_{(n)}$ der Delay-Line zugeführt werden.

Die von den Multiplizierer 5 erzeugten Signale werden Integratoren 7 zugeführt, die hier als Zähler ausgebildet sind.

Die Multiplizierer 5 und die Integratoren 7 sind Teile von Korrelationsschaltungen, wobei die Ausgangssignale der Integratoren die Korrelationsergebnisse $R_{(0)}$, $R_{(1)}$, $R_{(2)}$, ..., $R_{(L-1)}$ darstellen.

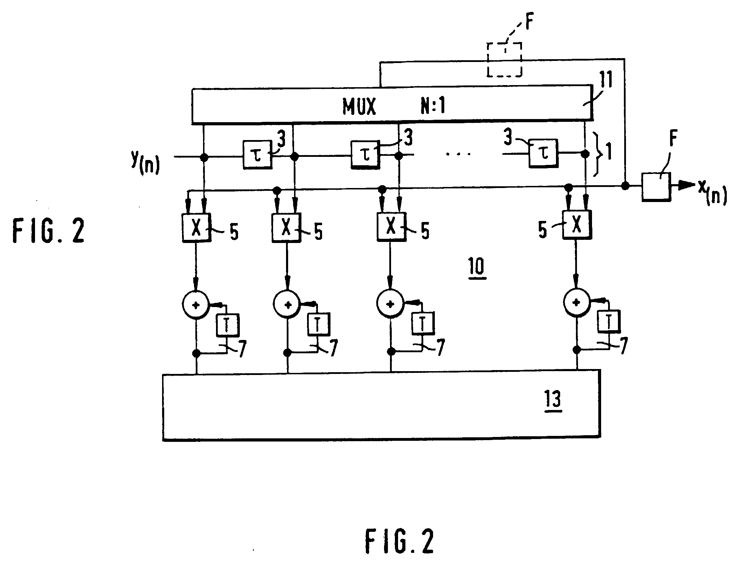

Aus Figur 2 ergibt sich eine einen Korrelator gemäß Figur 1 aufweisende Synchronisationsschaltung 10 mit einem der Delay-Line 1 zugeordneten, mit MUX bezeichneten Multiplexer 11 sowie einer Logik-Schaltung 13, die die Korrelationsergebnisse auswertet, nämlich die Maximalwerte der Korrelation bestimmt. Dort, wo das Auge offen ist, erreicht die Korrelation ihr Maximum.

Die Logik-Schaltung 13 dient dazu, den Multiplexer 11 auf die Augenöffnung und so auf den günstigsten Abtastzeitpunkt einzustellen.

Der Multiplexer 11 der Synchronisationsschaltung 10 ist bei der Abtastung des Datensignals auf die Augenmitte eingestellt. Die Wahl des Abtastzeitpunkts erfolgt aufgrund vorhergehender Korrelationen, wobei dazu auch zwei Multiplexer vorgesehen werden könnten.

Während der Abtastung des Datensignals durch den Multiplexer 11, an dessen Ausgang das synchronisierte Datensignal $x_{(n)}$ anliegt, erfolgt eine fortlaufende Korrelation dieses synchronisierten Datensignals mit dem am Eingang der Delay-Line 1 anliegenden Signal $y_{(n)}$. Diese Korrelation dient der überwachung der Synchronisationsschaltung beziehungsweise der Einstellung des Abtastzeitpunkts. Es wird geprüft, ob der Multiplexer das Datensignal noch korrekt in der Augenmitte abtastet. Auf die Überwachungsfunktion wird unten noch genauer eingegangen.

Am Ausgang $x_{(n)}$ kann ein Flip-Flop F, vorzugsweise ein D-Flip-Flop vorgesehen werden, das mit dem Bit-Takt getaktet ist und das das Datensignal mit dem Bit-Takt abtastet. Dadurch wird eine Regenerierung des Datensignals ermöglicht, welches überdies auch in Clock-Phase gebracht wird, das heißt, in die Takt-Phase der Schaltungsanordnung.

In Figur 2 ist gestrichelt angedeutet, daß das Flip-Flop F auch unmittelbar hinter dem Multiplexer 11 angeordnet sein kann.

Dadurch kann ein schaltungstechnisch einfacherer Multiplizierer eingesetzt werden. Überdies erhält man anstelle der Kreuzkorrelation die Impulsantwort des Übertragungssystems, das der in Figur 2 dargestellten Schaltungsanordnung vorgeschaltet ist.

Die Form der Signalkurve wird durch die Integratoren 7 in Abhängigkeit von der Integrationszeit bestimmt.

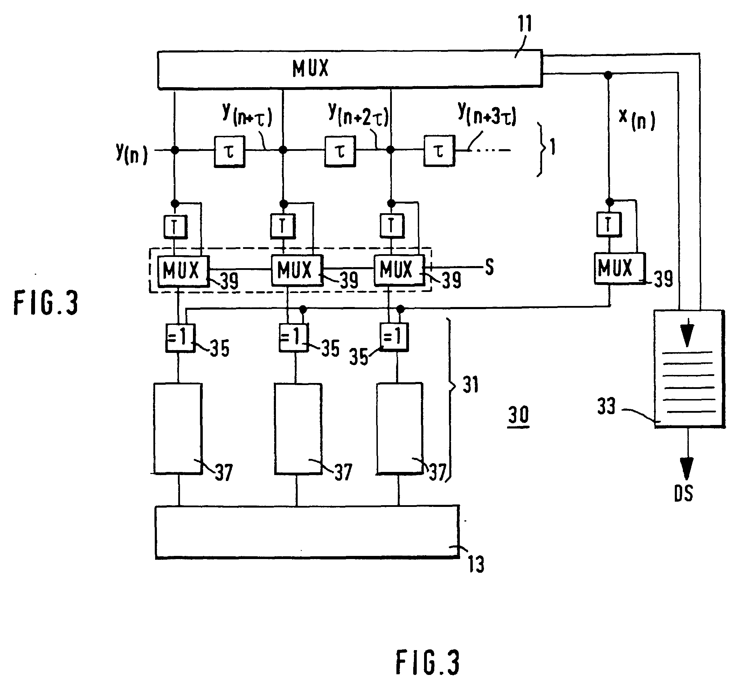

Figur 3 zeigt eine Synchronisationsschaltung 30 mit einem Korrelator 31 sowie mit einem der Bit-Slip-Kompensation dienenden Speicher 33.

Zur Vereinfachung der Darstellung ist in dieser Figur -wie in den Figuren 1 und 2- die Delay-Line 1 lediglich durch einige Verzögerungsglieder 3 angedeutet. Der Korrelator 31 ist hier durch als Multiplizierer dienende EXOR-Gatter 35 sowie durch nachgeschaltete Zähler 37, die als Integratoren dienen, angedeutet. Als Zähler können Hold-Flip-Flops, das heißt, 1-Bit-Zähler verwendet werden. Die Ergebnisse der Korrelation werden von einer Logik-Schaltung 13 ausgewertet.

Bei der Korrelation werden hier allerdings nicht die Signale $y_{(n)}$, die am Eingang der Delay-Line 1 anliegen, und das Signal $x_{(n)}$ am Ausgang des Multiplexers 11 verwendet. Vielmehr werden entweder die Signale $y_{(n)}$ oder die Signale $x_{(n)}$ um eine Taktperiode T verzögert. In Figur 3 sind daher Verzögerungsglieder T dargestellt. Allerdings sind hier, zur Verdeutlichung, beiden Signalen $y_{(n)}$ und $x_{(n)}$ derartige Verzögerungsglieder zugeordnet, für die Berechnung der Korrelation wird jedoch, zu einem gegebenen Zeitpunkt, lediglich eines der Signale verzögert.

Der Figur 3 ist zu entnehmen, daß beide Signale vor der Korrelation im Korrelator 31 einem mit MUX bezeichneten Multiplexer 39 zugeführt werden. Die in dieser Darstellung gezeigten drei Multiplexer 39 liegen an einer gemeinsamen Steuerleitung S.

Durch den hier dargestellten Aufbau der Schaltung erhält man, neben der aktuellen Korrelation, die zum Abtastzeitpunkt in einer bestimmten Augenmitte führt, einen Korrelationswert mit dem Datum vor oder nach dieser aktuellen Korrelation.

Das heißt also, es ergeben sich die folgenden Gleichungen, bei denen mit T die Periodendauer des Systemtakts bezeichnet wird:

$$R_{-1(k)} = \sum_{n=0}^{N-1} x_{(n+T)} \cdot y_{(k+n)}$$

$$R_{0(k)} = \sum_{n=0}^{N-1} x_{(n)} \cdot y_{(k+n)}$$

$$R_{+1(k)} = \sum_{n=0}^{N-1} x_{(n)} \cdot Y_{(k+n+T)}$$

Dadurch, daß Korrelationsergebnisse mit unterschiedlichem Datum vorliegen, kann in der Logikschaltung 13 ein permanenter Vergleich des momentanen Abtastzeitpunkts mit möglichen anderen vorgenommen werden. Das heißt, die Korrelationsergebnisse der verschiedenen parallel laufenden Korrelationsberechnungen ergeben Korrelationsfunktionen, die miteinander verglichen werden. In der Logikschaltung kann daher erkannt werden, wenn eine der momentanen Abtastung zugrundeliegende Augenöffnung aus der Delay-Line 1 herauswandert, wann also eine andere Augenöffnung der Abtastung zugrundegelegt werden sollte, um eine optimale Synchronisation aufrechtzuerhalten. Auch wenn eine Augenöffnung den Rand der Delay-Line nicht erreicht hat, kann die der Abtastung zugrundeliegende Augenöffnung verlassen und eine andere gewählt werden.

Durch einen Wander kann die für eine Abtastung gewählte Augenöffnung die Delay-Line, die nur eine begrenzte Länge aufweisen kann, verlassen. Dabei wird, während die eine Augenöffnung die Delay-Line verläßt, mindestens eine neue Augenöffnung auf der Delay-Line auftauchen. Diese wird mit Hilfe der Korrelationsergebnisse $R_{-1(k)}$ und $R_{+1(K)}$ aufgefunden.

Sobald die der aktuellen Abtastung zugrundeliegende Augenöffnung aufgrund eines Wanders über das Ende der Delay-Line hinauswandert, tritt ein Bit-Fehler auf. Dies kann vermieden werden, indem man rechtzeitig ein neues offenes Auge innerhalb der Delay-Linie sucht. Jedoch läßt sich ein Bitfehler nicht dadurch vermeiden, daß man lediglich den Abtastzeitpunkt von dem ursprünglichen Auge auf das neue offene Auge verlegt. Es ist zusätzlich erforderlich, den bei der Abtastung des Signals bei dem ursprünglichen Auge erhaltenen Wert und den Wert abzuspeichern, der bei der Abtastung bei dem neuen Auge erhalten wurde. Es ist dazu notwendig, das alte und das neue Datum zum gleichen Taktzeitpunkt in einen Speicher, der hier als FIFO ausgelegt ist, zu schreiben. Dies gilt allerdings nur, wenn das Datensignal schneller ist als der Takt des Systems.

Im umgekehrten Fall, wenn also das Datensignal langsamer ist als der Takt, wird ein Wert übersprungen. Das heißt, man wartet eine Taktperiode und überspringt eine Eintragung in den Speicher. Es wird also während des Wartens nichts in dem FIFO abgespeichert.

Bei diesem Verfahren wird die neue Augenöffnung wiederum durch eine Korrelation gewonnen. Bei dieser Korrelation wird allerdings das Datensignal $x_{(n)}$ oder $y_{(n+k)}$ um eine Taktperiode verzögert. Auf diese Weise erhält man -wie oben anhand der Erläuterungen zu Figur 3 dargelegt- eine Korrelation mit einem Datum vor oder nach dem $x_{(n)}$, welches der aktuellen Abtastung zugrundeliegt.

Am Ausgang des Speichers 33 liegt das synchronisierte Datensignal DS.

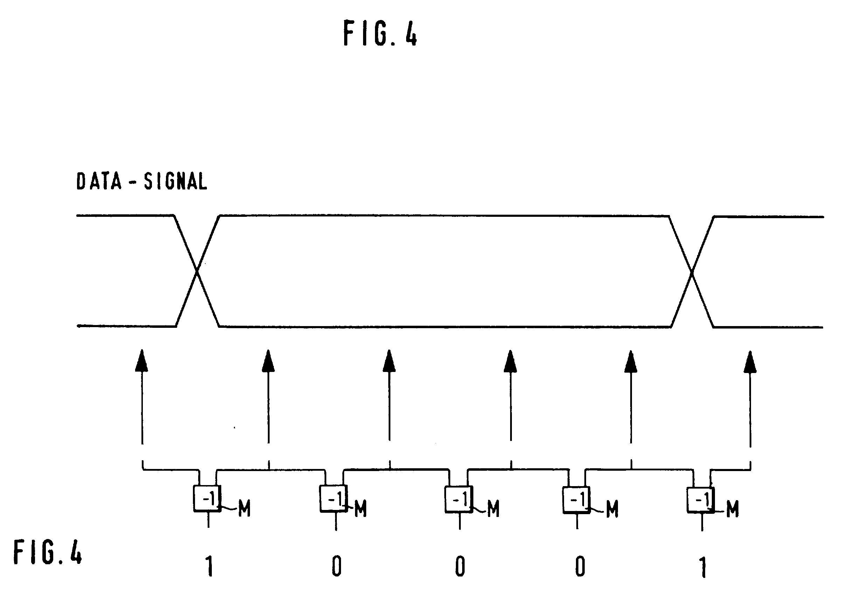

Aus dem Diagramm gemäß Figur 4 geht ein Datensignal hervor, das in dieser Darstellung ganz oben eingezeichnet ist. Das Signal wird, was durch die senkrecht stehende Pfeile angedeutet ist, bei dem dargestellten Beispiel sechsmal abgetastet. Die abgetasteten Daten werden miteinander korreliert. Die Ergebnisse dieser Berechnung werden in einer hier nicht dargestellten Logik-Schaltung ausgewertet.

Zur Vereinfachung der Korrelation reicht es, die Nachbarsignale miteinander zu korrelieren. Bei der Korrelation werden als Multiplizierer M EXOR-Gatter verwendet. Als Integrierer können 1-Bit-Counter verwendet werden, die hier nicht dargestellt sind.

Aus dem Ergebnis der Korrelation kann die Logik-Schaltung folgende Schlüsse ziehen:

Liegt am Ausgang der EXOR-Gatter eine "1" an, dann bedeutet dies, daß zwischen den beiden, der Korrelation zugrundeliegenden Abtastwerten, ein Datenwechsel stattgefunden hat. Liegt an dem Ausgang eines EXOR-Gatters eine "0", dann liegen die beiden korrelierten Abtastwerte in der Augenöffnung. Aus dem Bitmuster ist, wie aus Figur 4 ersichtlich, die Mitte einer Augenöffnung ohne weiteres zu ermitteln.

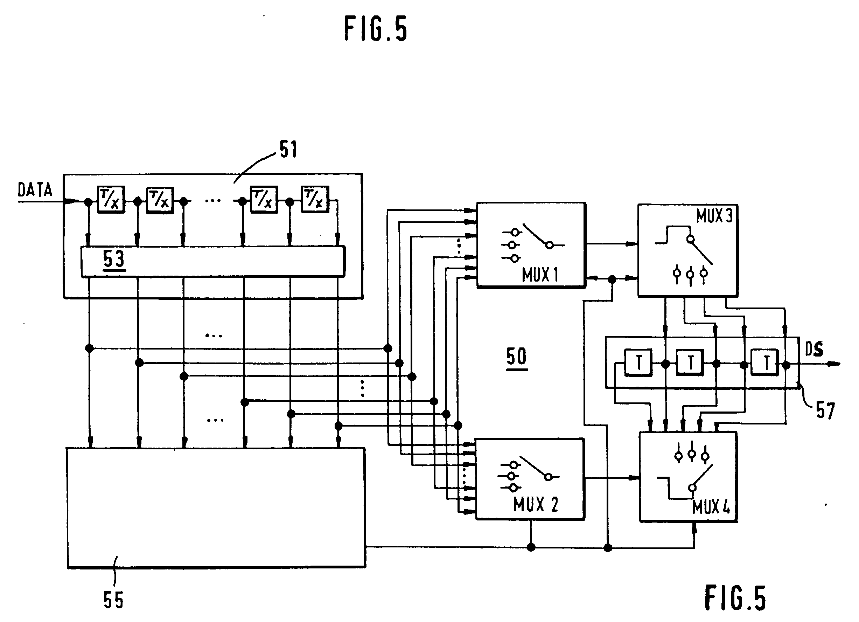

In Figur 5 ist eine Synchronisationsschaltung 50 dargestellt, die eine Delay-Line 51 mit einem die Abtastwerte der Delay-Line erfassenden Register 53 sowie eine Logik-Schaltung 55 zur Durchführung einer Korrelation der abgetasteten Signale und einer Auswertung der Korrelationsergebnisse bzw. Korrelationsfunktionen zur Einstellung der Abtastung auf eine Augenmitte umfaßt.

Die Delay-Line 51 weist mehrere Laufzeitglieder auf, die hier durch T/x gekennzeichnet sind.

x wird in Abhängigkeit von der Realisierung der Delay-Line gewählt. Wird die Verzögerungsleitung aus Flip-Flops, beispielsweise aus D-Flip-Flops aufgebaut, so wird für x eine INTEGER-Zahl $\geq 4$ gewählt. Werden bei der Realisierung der Delay-Line Laufzeitglieder, beispielsweise Inverter, verwendet, so wird für x eine REAL-Zahl $\geq 4$ gewählt.

Mit der Logik-Schaltung 55 wirken zwei Multiplexer MUX 1 und MUX 2 zusammen, die die abgetasteten Daten in einen Speicher 57, vorzugsweise in einen FIFO-Speicher, einschreiben. Die Einschreibung der Daten erfolgt nicht unmittelbar durch die Multiplexer MUX 1 und MUX 2, sondern über Multiplexer MUX 3 und MUX 4, wobei der Multiplexer MUX 3 dem ersten Multiplexer MUX 1 und der Multiplexer MUX 4 dem zweiten Multiplexer MUX 2 zugeordnet ist. Am Ausgang des Speichers liegt das synchronisierte Datensignal DS.

Zur Vermeidung eines Bit-Slips aufgrund eines Wanders wird hier ein sogenannter "atmender" Speicher, insbesondere ein FIFO-Speicher variabler Länge herangezogen werden. Dies ergibt sich insbesondere aus Figur 5.

Die Funktion der Synchronisationsschaltung 50 sowie das sich daraus ergebende Synchronisationsverfahren werden im folgenden genauer erläutert:

Aufgrund der Korrelation der Abtastwerte der Delay-Line 51 in der Logik-Schaltung 55 kann der optimale Abtastzeitpunkt, die Mitte der Augenöffnung, bestimmt werden. Aufgrund dieses Abtastzeitpunkts werden die Multiplexer MUX 1 und MUX 2 von der Logik-Schaltung angesteuert.

Neben der aktuellen Korrelation wird eine weitere Korrelation durchgeführt, bei der, wie anhand von Figur 3 erläutert, verzögerte Signale $y_{(n+T)}$ oder $x_{(n+T)}$ herangezogen werden. Die Auswertung dieser Korrelationsfunktion ergibt die Möglichkeit, festzustellen, ob der augenblickliche Abtastzeitpunkt noch optimal ist.

Wenn die Verzögerungszeit der Delay-Linie bekannt ist, kann auf die Berechnung der Korrelationsfunktionen $R_{-1(K)}$ und $R_{+1(K)}$ verzichtet werden, da der Verlauf der Korrelationsfunktionen gleich ist.

Im folgenden wird davon ausgegangen, daß aufgrund der Auswertung der Korrelationsergebnisse ein optimaler Abtastzeitpunkt gefunden wurde und daß die Abtastung des Signals mittels des Multiplexers MUX 1 erfolgt.

Sobald nun aufgrund eines Wanders der optimale Abtastzeitpunkt aus der Delay-Line herauswandert, wird dies von der Logik-Schaltung durch den Vergleich der aktuellen Korrelation mit der parallel durchgeführten Korrelation festgestellt. Es wird nunmehr zusätzlich der Multiplexer MUX 2 von der Logik-Schaltung 55 angesteuert.

Für den Fall, daß das Datensignal schneller ist als der Systemtakt, werden die Multiplexer MUX 1 und MUX 2 so angesteuert, daß sie nacheinander über die zugeordneten Multiplexer MUX 3 beziehungsweise MUX 4 das momentane Datum in den Speicher 57 einschreiben. Dabei schreibt der Multiplexer MUX 3 das alte und der Multiplexer MUX 4 das neue Datum ein, also das Datum der Augenöffnung, die nunmehr der weiteren Abtastung zugrundegelegt werden soll. Dabei wird die Länge des "atmenden" Speichers vergrößert.

Danach werden der erste Multiplexer MUX 1 sowie der zugehörige MUX 3 inaktiviert. Die weitere Abtastung des Datensignals erfolgt über den Multiplexer MUX 2.

Sobald nun die der Abtastung durch den Multiplexer MUX 2 zugrundeliegende Augenöffnung aus der Delay-Line wandert, und eine neue Augenöffnung der weiteren Abtastung zugrundegelegt werden muß, erfolgt dieselbe Prozedur erneut. Die Logik-Schaltung steuert wiederum beide Multiplexer MUX 2 und MUX 1 an, um, für den Fall, daß das Datensignal schneller als der Takt ist, beide Daten in den Speicher 57 einzutragen.

Aus dem oben Gesagten ergibt sich, daß immer dann, wenn die der Abtastung zugrundeliegende Augenöffnung aus der Delay-Line herauswandert, eine neue Augenöffnung der weiteren Abtastung zugrundegelegt wird. Diese neue Augenöffnung, beziehungsweise der neue Abtastzeitpunkt, wird durch eine Korrelation ermittelt. Immer dann, wenn ein neuer Abtastzeitpunkt gewählt wird, erfolgt eine Umschaltung von dem Multiplexer MUX 1 auf den Multiplexer MUX 2 oder umgekehrt, wobei die Ansteuerung durch die Logik-Schaltung 55 erfolgt.

Die Umschaltung der Multiplexer MUX 1 und MUX 2 kann auch schon vorgenommen werden, bevor eine der Abtastung zugrundegelegte Augenöffnung den Rand der Delay-Linie erreicht.

Wenn nun, entgegen der oben herangezogenen Annahme, das Datensignal langsamer als der Takt des Systems ist, werden die beiden Multiplexer MUX 3 und MUX 4 von der Logik-Schaltung 55 nicht angesteuert, wenn von einer momentanen Augenöffnung auf eine andere Augenöffnung umgeschaltet wird. Es wird dann vielmehr die Eintragung in den Speicher 57 für eine Taktperiode T verhindert; es erfolgt also keine Speicherung des Datums beim Wechseln des Abtastzeitpunkts. Aufgrund der Tatsache, daß während einer Taktperiode kein Eintrag in den FIFO erfolgt, kann dieser verkürzt werden. Dies wird durch die Multiplexer 3 oder 4, je nachdem welcher gerade aktiviert ist, vorgenommen.

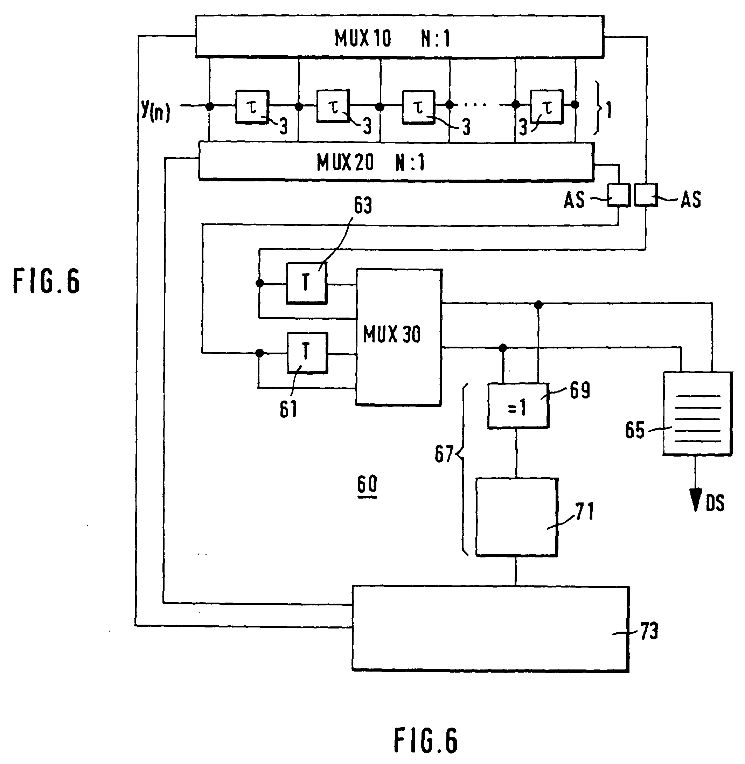

Figur 6 gibt ein Prinzipschaltbild einer Synchronisationsschaltung 60 wieder, mit der eine serielle Korrelation durchgeführt wird. Die Schaltung weist eine Delay-Line 1, einen ersten Multiplexer MUX 10, einen zweiten Multiplexer MUX 20 sowie einen dritten Multiplexer MUX 30 auf. Letzterer ist über Verzögerungsschaltungen 61 und 63 mit den beiden ersten Multiplexern verbunden. Die Ausgangsleitungen des Multiplexers MUX 30 führen zu einem Speicher 65, der vorzugsweise als FIFO-Speicher ausgelegt ist. Am Ausgang dieses Speichers liegt das synchronisierte Datensignal DS an. Die Ausgangssignale des Multiplexers MUX 30 werden einer Korrelation unterworfen, wobei der hier angedeutete Korrelator 67 einen Multiplizierer 69 sowie einen Zähler 71 aufweist. Als Multiplizierer ist hier beispielsweise EXOR-Gatter vorgesehen. Der Integrator 71 ist als Zähler ausgelegt. Der Zähler kann auch ein 1-Bit-Zähler mit Überlauf sein.

Das Ergebnis der Korrelation wird einer Logikschaltung 73 zugeführt, die aus der Korrelation die Augenmitte bestimmt und die beiden Multiplexer MUX 10 und MUX 20 entsprechend ansteuert.

Die hier dargestellte Schaltung wird für den Fall verwendet, daß die Verzögerungszeit der Delay-Line 1, von der lediglich einige Verzögerungsglieder 3 dargestellt sind, unbekannt ist.

Grundsätzlich muß hier eine vollständige Korrelation der an der Delay-Line 1 abgenommenen Signale durchgeführt werden. Zur Realisierung dieses Verfahrens kann jedoch der Schaltungsaufwand dadurch reduziert werden, daß man die Korrelation nicht parallel berechnet, sondern seriell. Dazu ist es allerdings erforderlich, daß die einzelnen Korrelationsergebnisse abgespeichert werden, um dann daraus in der Logik-Schaltung den optimalen Abtastzeitpunkt bestimmen zu können.

Die serielle Verarbeitung führt dazu, daß der optimale Abtastzeitpunkt nicht so rasch bestimmt werden kann, wie bei der parallelen. Eine Reaktion auf einen Wander kann also nicht so rasch erfolgen. Bei diesem Verarbeitungsverfahren können also nur langsamere Wander ohne Bitfehler ausgeglichen werden.

Es ist nach allem ein wesentliches Prinzip des hier beschriebenen Synchronisationsverfahrens, daß die Abtastung in der Augenmitte und nicht an der Flanke erfolgt. Dadurch sind die Schaltung und das Verfahren wesentlich unempfindlicher gegen einen Jitter auf dem Datensignal als herkömmliche Schaltungen beziehungsweise Verfahren.

Anstelle eines PLL wird hier also eine Delay-Line verwendet, deren Signale abgegriffen und die Abtastwerte miteinander korreliert werden. Mit Hilfe einer Logik-Schaltung wird das Maximum der Korrelationsfunktionen bestimmt, um einen optimalen Abtastzeitpunkt zu erhalten. Das Maximum der Korrelation wird bei der Augenmitte erreicht. Wenn also ein Multiplexer auf das Maximum der Korrelation eingestellt wird, so erfolgt die Abtastung des Datensignals im Bereich der Augenmitte.

Eine Vereinfachung des Verfahrens wird dadurch erreicht, daß eine diskrete Korrelation der Abgriffe durchgeführt wird. Sofern zusätzlich eine Werte-Definition der bei der Korrelation verwendeten Signale durchgeführt wird, kann eine weitere Vereinfachung der Schaltung erreicht werden. Durch die Zuordnung einer "1" für einen HIGH-Pegel und einer -1" für einen LOW-Pegel erreicht man eine wertdiskrete Betrachtung der Signale $x_{(n)}$ und $y_{(n)}$.

Für eine Korrelation dieser Funktionen kann eine digitale Schaltung verwendet werden, bei der die Multiplizierer als EXOR-Gatter und die Integratoren durch Zähler realisiert werden.

Zu der Schaltungseinrichtung gemäß Figur 6 ist grundsätzlich festzustellen, daß ein symmetrischer Aufbau gewählt wurde. Dadurch, daß zwei Multiplexer MUX 10 und MUX 20 vorgesehen sind, kann einer der Multiplexer zur Abtastung des aktuellen Datensignals vorgesehen werden, während der andere der Ermittlung eines Seitenauges dient, welches vor oder nach dem aktuellen Abtastauge liegt, oder auch dazu, den Abtastzeitpunkt innerhalb des aktuellen Auges zu überwachen.

Aufgrund des symmetrischen Schaltungsaufbaus kann die Funktion der beiden Multiplexer frei ausgetauscht werden, wobei der ursprünglich für den Datenpfad vorgesehene Multiplexer dem Korrelationspfad zugeordnet wird und umgekehrt.

Die Umschaltung der beiden Multiplexer MUX 10 und MUX 20 erfolgt mit Hilfe des mit diesen verbundenen Multiplexers MUX 30. Durch den hier gewählten Schaltungsaufbau ist auch bis zu sehr hohen Datenfrequenzen eine Umschaltung möglich.

Zur Vereinfachung der Realisierung der Schaltungsanordnung ist zwischen die Multiplexer MUX 10 und MUX 20 und den Multiplexer MUX 30 je eine Abtastschaltung AS geschaltet, die die zeitkontinuierlichen Signale der Multiplexer MUX 10 und MUX 20 umsetzt in zeitdiskrete Signale. Die weitere Verarbeitung dieser Signale kann dann wesentlich einfacher durchgeführt werden.

Besonders bevorzugt werden die Abtastschaltungen AS als Flip-Flops realisiert. Dadurch kann anstelle der Kreuzkorrelation die Impulsantwort des der Schaltung gemäß Figur 6 vorgeschalteten Übertragungssystems ausgewertet werden, um den optimalen Abtastzeitpunkt, die Augenmitte, zu bestimmen.

Wird eine derartige Schaltung bei einem ergodischen System eingesetzt, bei dem ein langsamer Wander auftritt, so wird eine serielle Korrelation durchgeführt.

Die dargestellte Schaltung kann auch bei einem plesiochronen System eingesetzt werden, bei dem in verschiedenen Bereichen unterschiedliche Taktfrequenzen auftreten. Beim Zusammenführen von Daten über Bereiche verschiedener Taktfrequenzen hinweg treten normalerweise Datenverluste durch Bit-Slips auf, die mit Hilfe der erfindungsgemäßen Schaltung vermieden werden können. Es ist allerdings davon auszugehen, daß der Unterschied zwischen den einzelnen Taktfrequenzen nicht zu groß sein darf. Es bedarf auch einer Anpassung der Datensignale: Es müssen Stopfmechanismen, beispielsweise Stopf-Bits, eingefügt werden, damit die Synchronisierung und Regenerierung des Datensignals fehlerfrei erfolgen kann.

Die anhand von Figur 6 erläuterte Schaltung ist auch bei mesochronen Systemen einsetzbar. Auch dort kann -obwohl lediglich ein einziger Systemtakt vorgegeben ist- in verschiedenen Bereichen des Systems, beispielsweise aufgrund von Bauteiltoleranzen und Temperaturänderungen, eine Verschiebung des Systemstakts auftreten. Dadurch wird ein Wander des Datensignals hervorgerufen. Mit der hier erläuterten Schaltung kann trotz dieses Wanders das Datensignal sehr einfach synchronisiert und regeneriert werden.

Das Verfahren ist auch in geschlossenen digitalen Systemen wie Vermittlungsanlagen oder in der Übertragungstechnik einsetzbar.

Nach allem zeigt sich, daS mit dem hier beschriebenen Synchronisationsverfahren durch eine Korrelation von Abtastwerten einer Delay-Line ein optimaler Abtastpunkt in der Augenmitte des Datensignals errechnet wird. Dieses Verfahren ist also wesentlich unempfindlicher gegen Jitter als andere. Ein Bitverlust, der auf einem Wander beruht, wird durch einen Speicher, hier durch einen FIFO, verhindert.

Die hier beschriebene Schaltungsanordnung und das Verfahren können also zu einem Ausgleich eines Jitters und eines Wanders eines Datensignals verwendet werden. Sie sind daher bei allen seriellen digitalen Datenverbindungen einsetzbar. Insbesondere können mit dem Verfahren auch plesiochrone Datenströme verarbeitet werden, also Daten in System mit lokalen Takten, wenn eine sogenannte Stopftechnik nachgeschaltet wird.

**Patentansprüche**

1. Schaltungsanordnung (10, 30, 50, 60) zum Regenerieren und Synchronisieren eines digitalen Signals hoher Bitfolgefrequenz ((y(n)), die eine Reihenschaltung aus einer steuerbaren Delay-Line (1; 51) und einer Entscheidungslogik aufweist, welche von dem digitalen Signal durchlaufen wird,
**dadurch gekennzeichnet**, daß die Entscheidungslogik eine Abtastschaltung (AS) aufweist, daß die Entscheidungslogik wenigstens eine Korrelations-Schaltung (5, 7; 35, 37; 69, 71) und einen Multiplexer (11; MUX 1- MUX 4 ; MUX 10 - MUX 30) sowie zumindest eine die Ausgangssignale der Korrelations-Schaltung auswertende und den Multiplexer steuernde Logik-Schaltung (13; 55; 73) aufweist, welche derart steuert, daß das digitale Signal in seiner Augenmitte abgetastet wird.

2. Schaltungsanordnung nach Anspruch 1, dadurch gekennzeichnet, daß die Korrelations-Schaltung Multiplizierer (5; 35) und Integratoren (7; 37) umfaßt, und daß vorzugsweise als Multiplizierer EXOR-Gatter und als Integratoren Zähler zur Durchführung einer diskreten Korrelation verwendbar sind.

3. Schaltungsanordnung nach Anspruch 2, dadurch gekennzeichnet, daß als Integrator ein Zähler (71) verwendet wird, der als 1-Bit-Zähler mit Überlauf ausgebildet ist.

4. Schaltungsanordnung nach einem der Ansprüche 1 bis 3, dadurch gekennzeichnet, daß zur seriellen Berechnung der Korrelation zwei Multiplexer (MUX 10, MUX 20) vorgesehen sind, die über mindestens eine Verzögerungsschaltung (61, 63) mit einem weiteren Multiplexer (MUX 30) zusammenwirken, und daß ein Zwischenspeichel (65) vorgesehen ist, in den Ergebnisse der seriellen Korrelation ablegbar sind.

5. Schaltungsanordnung nach einem der Ansprüche 1 bis 4, dadurch gekennzeichnet, daß zum Ausgleich eines auf einem Wander beruhenden Bit-Slips ein Speicher (33; 57; 65), vorzugsweise ein FIFO-Speicher, vorgesehen ist.

6. Schaltungsanordnung nach Anspruch 5, dadurch gekennzeichnet, daß zwei Multiplexer (MUX 1, MUX 2) vorgesehen sind, die Daten in den Speicher (57) einlesen, und daß zwei weitere Multiplexer (MUX 3, MUX 4) vorgesehen sind, die mit diesen zusammenwirken und die Länge des Speichers variieren.

7. Verfahren zur Regenerierung und Synchronisation eines digitalen Datensignals hoher Bitfolgefrequenz, **gekennzeichnet durch** folgende Schritte:

   - Die einzelnen von einer Delay-Line abgegriffenen Signale $x_{(n)}$ und $y_{(n+k)}$ werden - vorzugsweise durch eine diskrete Korrelation - miteinander korreliert;

   - Bestimmung des Maximums der Korrelation zur Ermittlung der Augenmitte und

   - Einstellung eines Multiplexers auf die Augenmitte.

8. Verfahren nach Anspruch 7, dadurch gekennzeichnet, daß zum Ausgleich eines Wanders des Datensignals zum Systemtakt eine neue Augenöffnung als neuer Abtastpunkt gewählt wird, wobei die neue Augenöffnung mittels einer Korrelation bestimmt wird.

9. Verfahren nach Anspruch 8, dadurch gekennzeichnet, daß jeweils Nachbarsignale der Delay-Line korreliert werden, wobei als Integratoren 1-Bit-Counter verwendet werden.

10. Verfahren nach Anspruch 9, dadurch gekennzeichnet, daß die Korrelation seriell berechnet und die Korrelationsergebnisse zur Bestimmung der Augenöffnung als Abtastzeitpunkt in einem Speicher abgelegt werden.

11. Verfahren nach Anspruch 9 oder 10, dadurch gekennzeichnet,

- daß zur Bit-Slip-Kompensation mindestens ein Speicher, vorzugsweise ein FIFO-Speicher, verwendet wird und

- daß das neue und alte Datum zum gleichen Taktzeitpunkt in den Speicher geschrieben wird, falls das Datensignal schneller als der Systemtakt ist, oder

- daß die Datensignale $x_{(n)}$ oder $y_{(n+k)}$ um eine Taktperiode verzögert werden, falls das Datensignal langsamer als der Systemtakt ist.

12. Verfahren nach Anspruch 9 oder 10, dadurch gekennzeichnet, daß zur Bit-Slip-Kompensation ein Speicher, vorzugsweise ein FIFO-Speicher, verwendet wird,

- dessen Länge vorzugsweise durch mindestens einen Multiplexer verlängert wird, falls das Datensignal schneller als der Systemtakt ist, oder

- dessen Länge vorzugsweise durch mindestens einen Multiplexer verkürzt wird, falls das Datensignal langsamer ist als der Systemtakt.

## Claims

1. A circuit arrangement (10, 30, 50, 60) for regenerating and synchronizing a high-bit rate digital signal ($y_{(n)}$), which comprises a series circuit with a controllable delay line (1, 51), and a decision logic through which the digital signal passes, characterized in that the decision logic contains a scanning circuit (AS), that the decision logic comprises at least one correlation circuit (5, 7, 35, 37, 69, 71) and a multiplexer (11, MUX 1 - MUX 4, MUX 10 - MUX 30), and at least one logic circuit (13, 55, 73) which evaluates the output signals of the correlation circuit and controls the multiplexer in a way so that the digital signal is scanned in the center of its eye opening.

2. A circuit arrangement as claimed in claim 1, characterized in that the correlation circuit comprises multipliers (5, 35) and integrators (7, 37), and that EXOR gates can preferably be used as multipliers and counters as integrators to perform a discrete correlation.

3. A circuit arrangement as claimed in claim 2, characterized in that a counter (71) is used as integrator, which is designed as a 1-bit counter with overflow.

4. A circuit arrangement as claimed in one of claims 1 to 3, characterized in that two multiplexers (MUX 10, MUX 20) are provided for the serial calculation of the correlation, which cooperate with a further multiplexer (MUX 30) via at least one delay circuit (61, 63), and that a temporary memory (65) is provided wherein the results of the serial correlation can be stored.

5. A circuit arrangement as claimed in one of claims 1 to 4, characterized in that a memory (33, 57, 65), preferably a FIFO memory is provided to compensate for a bit-slip caused by a wanderer.

6. A circuit arrangement as claimed in claim 5, characterized in that two multiplexers (MUX 1, MUX 2) are provided which read data into the memory (57), and two further multiplexers (MUX 3, MUX 4) are provided which cooperate with these and vary the length of the memory.

7. A method for regenerating and synchronizing a high-bit rate digital data signal, characterized by the following steps:

- the individual signals $x_{(n)}$ and $y_{(n+k)}$ which are tapped from a delay line are correlated with each other, preferably by means of a discrete correlation;

- determination of the maximum of the correlation to determine the center of the eye opening, and

- adjustment of one multiplexer for the center of the eye opening.

8. A method as claimed in claim 7, characterized in that to compensate for the wandering of a data signal from the system clock, a new eye opening is chosen as a new scanning point, where the new eye opening is determined by means of a correlation.

9. A method as claimed in claim 8, characterized in that in each case adjacent signals of the delay line are correlated, using 1-bit counters as integrators.

10. A method as claimed in claim 9, characterized in that the correlation is calculated serially, and that the correlation results for determining the eye opening as the scanning instant are stored in a memory.

11. A method as claimed in claims 9 or 10, characterized in that:

- at least one memory, preferably a FIFO memory is used for the bit-slip compensation, and

- the new and the old data are written to the memory at the same clock time if the data signal is faster than the system clock, or

- the data signals $x_{(n)}$ or $y_{(n+k)}$ are delayed by one clock period if the data signal is slower than the system clock.

12. A method as claimed in claims 9 or 10, characterized in that a memory, preferably a FIFO memory is used for the bit-slip compensation,

- whose length is preferably extended by at least one multiplexer if the data signal is faster than the system clock, or

- its length is preferably shortened by at least one multiplexer if the data signal is slower than the system clock.


**Revendications**

1. Circuit (10, 30, 50, 60) destiné à régénérer et à synchroniser un signal numérique de débit binaire élevé (4 (n)) présentant un circuit série composé d'une ligne à retard (1 ; 51) pouvant être commandée et une logique de décision, qui est parcourue par le signal numérique, caractérisé en ce que la logique de décision présente un circuit de lecture (AS), en ce que la logique de décision présente au moins un circuit de corrélation (5, 7 : 35, 37 ; 69, 71) et un multiplexeur (11 ; MUX 1- MUX 4 ; MUX 10 - MUX 30) ainsi qu'au moins un circuit logique (13 ; 55 ; 73) commandant le multiplexeur et analysant les signaux de sortie du circuit de corrélation, lequel circuit logique commandant de telle sorte que les signaux numériques soient lus dans son centre de l'oeil.

2. Circuit suivant la revendication 1, caractérisé en ce que le circuit de corrélation comprend des multiplicateurs (5 ; 35) et des intégrateurs (7 ; 37) et en ce que l'on peut utiliser de préférence des portes OU EXCLUSIF en tant que multiplicateurs et des compteurs en tant qu'intégrateurs pour exécuter une corrélation discrète.

3. Circuit suivant la revendication 2, caractérisé en ce qu'un compteur (71) est utilisé en tant qu'intégrateur, et peut être réalisé sous la forme d'un compteur à 1 bit avec débordement.

4. Circuit suivant l'une des revendications 1 à 3, caractérisé en ce que pour le calcul en série de la corrélation sont prévus deux multiplexeurs (MUX 10, MUX 20) qui coopèrent avec un autre multiplexeur (MUX 30) par l'intermédiaire d'au moins un circuit de retard (61, 63), et en ce qu'une mémoire temporaire (65) est prévue dans laquelle les résultats de la corrélation en série peuvent être enregistrés.

5. Circuit suivant l'une des revendications 1 à 4, caractérisé en ce que, pour compenser un glissement binaire dû à une dérive, il est prévu une mémoire (33 ; 57 ; 65), de préférence une mémoire FIFO.

6. Circuit suivant la revendication 5, caractérisé en ce que deux multiplexeurs (MUX 1, MUX 2) sont prévus pour entrer des données dans la mémoire (57) et en ce que deux autres multiplexeurs (MUX 3, MUX 4) sont prévus pour coopérer avec les premiers multiplexeurs et pour faire varier la longueur de la mémoire.

7. Procédé pour régénérer et synchroniser un signal de données numériques de débit binaire élevé, caractérisé par les étapes suivantes :

- les signaux individuels $x_{(n)}$ et $Y_{(n+k)}$ prélevés par une ligne à retard sont corrélés l'un à l'autre (de préférence par une corrélation discrète) ;
- le maximum de la corrélation est déterminé pour donner le centre de l'oeil et
- un multiplexeur est réglé au centre de l'oeil.

8. Procédé suivant la revendication 7, caractérisé en ce que, pour compenser une dérive du signal de données par rapport au cycle de système, une nouvelle ouverture de l'oeil est choisie comme nouveau point de lecture, la nouvelle ouverture de l'oeil étant déterminée au moyen d'une corrélation.

9. Procédé suivant la revendication 8, caractérisé en ce que des signaux voisins de la ligne à retard sont corrélés respectivement, des compteurs à 1 bit étant utilisé comme intégrateurs.

10. Procédé suivant la revendication 9, caractérisé en ce que la corrélation est calculée en série et en ce que les résultats de corrélation sont enregistrés dans une mémoire pour déterminer l'ouverture de l'oeil comme instant de lecture.

11. Procédé suivant la revendication 9 ou 10, caractérisé en ce que

- pour la compensation du glissement binaire, au moins une mémoire est utilisée, de préférence une mémoire FIFO et
- en ce que la nouvelle donnée et l'ancienne donnée sont écrites au même instant de cycle dans la mémoire, au cas où le signal de données est plus rapide que le cycle du système, ou
- en ce que les signaux de données $x_{(n)}$ et $y_{(n+k)}$ sont retardés d'une période de cycle au cas où le signal de données est plus lent que le cycle de système.

12. Procédé suivant la revendication 9 ou 10, caractérisé en ce que, pour la compensation du glissement binaire, une mémoire est utilisée, de préférence une mémoire FIFO,

- dont la longueur est rallongée de préférence par au moins un multiplexeur, au cas où le signal de données est plus rapide que le cycle du système, ou
- dont la longueur est raccourcie de préférence par au moins un multiplexeur, au cas où le signal de données est plus lent que le cycle du système.

FIG.1

FIG. 2

FIG. 2

FIG.3

FIG.3

# FIG. 4

DATA - SIGNAL

FIG.4

1        0        0        0        1

EP 0 471 207 B1

FIG.5

FIG.6

FIG.6